Europäisches Patentamt

European Patent Office

Office européen des brevets

(11) Veröffentlichungsnummer: **0 195 283 B1**

(12) **EUROPÄISCHE PATENTSCHRIFT**

(45) Veröffentlichungstag der Patentschrift: **03.07.91**

(51) Int. Cl.⁵: **G06F 15/66**, G06K 9/34, G06K 9/46

(21) Anmeldenummer: **86102519.5**

(22) Anmeldetag: **26.02.86**

(54) **Schaltungsanordnung zur Segmentation eines Binärbildes.**

(30) Priorität: **16.03.85 DE 3509508**

(43) Veröffentlichungstag der Anmeldung:
**24.09.86 Patentblatt 86/39**

(45) Bekanntmachung des Hinweises auf die
Patenterteilung:
**03.07.91 Patentblatt 91/27**

(84) Benannte Vertragsstaaten:
**DE FR GB IT NL SE**

(56) Entgegenhaltungen:
**FR-A- 2 173 464
US-A- 4 183 013**

**PATENT ABSTRACTS OF JAPAN, Band 6, Nr.
262 (P-164)[1140], 21. Dezember 1982; JP-
A-57 155 672 (TOKYO KEIKI K.K.) 25-09-1982**

(73) Patentinhaber: **Bodenseewerk Gerätetechnik
GmbH
Alte Nussdorfer Strasse 15 Postfach 1120
W-7770 Überlingen/Bodensee(DE)**

(72) Erfinder: **Uihlein, Christoph, Dr.
Strandweg 39
W-7770 Überlingen(DE)**

(74) Vertreter: **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg(DE)**

## Beschreibung

Die Erfindung betrifft eine Schaltungsanordnung zur Segmentation eines aus Zeilen und Spalten zusammengesetzten Binärbildes, enthaltend

(a) einen Bildspeicher zur Speicherung des Binärbildes,

(b) Mittel zur Bestimmung eines Segmentationskeimes und

(c) Mittel zum Prüfen, ob ein Bildelement dem Segmentationkeim direkt oder über eine ununterbrochene Kette von einander benachbarten Bildelementen verbunden ist.

Es geht dabei um folgendes: Es wird ein zweidimensionales Bild beispielsweise auf einem photoelektrischen Mosaikdetektor erzeugt. Der Detektor hat Zeilen und Spalten, so daß jedes Detektorelement durch die Angabe seiner Zeile und seiner Spalte definiert ist. Je nachdem, ob die an einem bestimmten Detektorelement wirksame Bildhelligkeit einen vorgegebenen Schwellwert überschreitet oder nicht, wird dem Detektorelement ein Zustand "logisch 1" oder "logisch 0" zugeordnet. Das Bild wird somit reduziert zu einem zweidimensionalen Muster von logischen Zuständen, einem "Binärbild". Es sei angenommen, daß "logisch 1" jeweils ein "objektzugehöriges" Bildelement bezeichnet, also ein Bildelement, das zu irgendeinem beobachteten Objekt gehört.

Ein solches Binärbild kann mehrere getrennte Objekte enthalten. Bei der Bildverarbeitung gilt es zunächst, diese getrennten Objekte voneinander zu unterscheiden, also festzustellen, welche in den logischen Zustand "1" gesetzten Bildpunkte zu diesem Objekt gehören. Das bezeichnet man als "Segmentation".

Eine weitere Aussage über das Objekt kann man gewinnen, wenn Binärbilder unter Verwendung verschiedener Schwellwerte erzeugt werden, wenn also beispielsweise die Grenze der Bildhelligkeit, bei welcher ein Bildpunkt auf "1" gesetzt wird, nach oben verschoben wird. Es kann dann ein zusamenhängendes Objekt unter Umständen in mehrere Einzelobjekte zerfallen. Das würde bedeuten, daß es sich um ein Objekt handelt, das mehrere hellere Bereiche aufweist. Auch hierfür ist eine Segmentation der Einzelobjekte erforderlich.

Bei der Segmentation wird jeder Bildpunkt mit den benachbarten Bildpunkten verglichen. Ausgehend von einen Segmentationskeim, also einem Bildpunkt, der als zu dem zu untersuchenden Objekt gehörig festgestellt ist, wird geprüft, ob ein betrachteter Bildpunkt mit dem Segmentationskeim in einer Nachbarschaftsbeziehung steht, also an den Segmentationskeim abgrenzt. Ein solcher Bildpunkt wird dem Objekt zugeordnet. Weitere Bildpunkte werden daraufhin untersucht, ob sie mit dem Segmentationskeim oder mit solchen zugeordneten Bildpunkten in einer Nachbarschaftsbeziehung stehen. Auf diese Weise können alle Bildpunkte erfaßt werden, die zu einem durch den Segmentationskeim definierten Objekt gehören. Dies geschieht üblicherweise in der Form, daß mittels eines entsprechend programmierten Rechners jeder Bildpunkt einzeln auf das Bestehen solcher Nachbarschaftsbeziehungen untersucht wird.

Die beschriebene Bildverarbeitung mit einem programmierten Rechner, bei welchem die Bildpunkte einzeln nach einem bestimmten Algorithmus untersucht werden, erfordert eine nicht unerhebliche Rechenzeit, die in manchen Fällen nicht zur Verfügung steht. Beispiele hierfür sind intelligente Suchköpfe für zielsuchende Flugkörper.

Die FR-A-2 173 464 betrifft eine Vorrichtung zur Zeichenerkennung nach logischen Kriterien. Es werden aufeinanderfolgende Spalten untersucht. Die in den beiden Spalten erhaltenen Bildinformationen werden durch logische Verknüpfung in bestimmte Grundmuster in einem Paar von Zeilenregistern umgesetzt, die beispielsweise einen geschlossenen und einen offenen Bogen zu unterscheiden gestatten. Aus der Folge dieser Grundmuster kann dann das gesuchte Zeichen bestimmt werden.

Es geht dort nicht um das hier vorliegende Problem der Segmentation eines beliebigen Binärbildes, Vielmehr wird vorausgesetzt, daß die einzelnen Zeichen wohldefiniert aufeinanderfolgen.

Die US-A-4 183 013 befaßt sich mit der Erkennung von gegebenenfalls unregelmäßig geformten Objekten. Dabei werden bei der zeilenweisen Abtastung die Objektgrenzen erfaßt, also der Übergang von einem Gebiet mit Nullen zu einem Gebiet mit Einsen. Die Randpunkte aufeinanderfolgender Zeilen werden daraufhin überprüft, ob sie zu der gleichen Randlinie gehören. Nach anderen Kriterien werden bestimmte Grundmuster der Randlinien erkannt. Aus diesen Grundmustern werden bestimmte Typen von Objekten und deren Anzahl identifiziert.

Nach der Lehre der US-A-4 183 013 geschieht dies durch ein Rechnerprogramm.

Der Erfindung liegt die Aufgabe zugrunde, bei einer Schaltungsanordnung der eingangs genannten Art die für die Bildverarbeitung erforderliche Zeit zu verkürzen.

Erfindungsgemäß wird diese Aufgabe gelöst durch

(d) ein erstes Register für jeweils eine volle Zeile des Binärbildes,

(e) ein zweites Register für jeweils eine volle Zeile des Binärbildes,

(f) Mittel zum Laden des ersten Registers während eines Abtastzyklus mit Bildelementen einer betrachteten Zeile, die als zugehörig zu dem Objekt erkannt sind, zu dem der Segmentationskeim gehört,

(g) Mittel zum Laden des zweiten Registers während des besagten Abtastzyklus mit Bildelementen einer zu der jeweils betrachteten Zeile benachbarten Zeile des Binärbildes,

(h) eine festverdrahtete Logikschaltung mit

($h_1$) einem Satz von ersten Schaltungseingängen, die mit je einer Speicherstelle des ersten Registers verbunden sind,

($h_2$) einem Satz von zweiten Schaltungseingängen, die mit je einer Speicherstelle des zweiten Registers verbunden sind,

($h_3$) einem Satz von Schaltungsausgängen und

($h_4$) einer Folge von Verknüpfungseinheiten, denen je einer der ersten und der zweiten Schaltungseingänge und einer der Schaltungsausgänge zugeordnet ist und von denen jede weitere Eingänge aufweisen, die mit Objektzugehörigkeit signalisierenden Ausgängen der jeweils benachbarten Verknüpfungseinheiten verbunden sind, wobei

- jeder Schaltungsausgang stets dann kein einem objektzugehörigen Bildelement entsprechendes Signal liefert, wenn kein objektentsprechendes Signal an dem zugehörigen zweiten Schaltungseingang anliegt,
- der Schaltungsausgang jeder Verknüpfungseinheit ein einem objektzugehörigen Bildelement entsprechendes Signal liefert, wenn
- ein objektentsprechendes Signal an dem zugehörigen zweiten Schaltungseingang anliegt und
- ein solches Signal an dem ersten Schaltungseingang oder an wenigstens einem der weiteren Eingänge anliegt.

(i) Mittel zum Laden des ersten Registers mit diesen Ausgangssignalen während eines späteren Abtastzyklus.

Mit einer solchen Anordnung können wesentliche Schritte der Segmentation zeilenweise durch eine festverdrahtete Logikschaltung vorgenommen werden. Es ergibt sich damit eine wesentliche Verkürzung der für die Bildverarbeitung insgesamt erforderlichen Zeit. Es steht dadurch mehr Zeit für die intelligente Auswertung der erhaltenen Bildinformation zur Verfügung. Trotzdem können auf diese Weise auch schnell veränderliche Objekte erfaßt und verfolgt werden.

Die festverdrahtete Logikschaltung prüft, ob ein Bildelement des zweiten Registers, das ein "objektentsprechendes" Signal, z.B. "logisch eins", liefert, mit einem objektzugehörigen Bildelement des ersten Registers direkt oder über eine ununterbrochene Kette von einander benachbarten Bildelementen des zweiten Registers verbunden ist. Die Bildelemente des ersten Registers sind dabei in einem vorhergehenden Zyklus schon als "objektzugehörig", als zu dem zu segmentierenden Objekt gehörig, erkannt worden. Wenn eine solche direkte oder indirekte Nachbarschaftsbeziehung besteht, erscheint an dem Ausgang der dem Bildelement zugeordneten Verknüpfungseinheit ein objektentsprechendes Signal. Das Bildelement ist dann als objektzugehörig erkannt. Besteht eine solche Nachbarschaftsbeziehung nicht, wird das Signal "nicht-objektzugehörig", also z.B. "logisch null". Die so an den Ausgängen erhaltenen Signale werden gespeichert und sind bei der Untersuchung der nächsten Zeile auf die ersten Eingänge der Logikschaltung geschaltet.

Ausgestaltungen der Erfindung sind Gegenstand der Unteransprüche. Ausführungsbeispiele der Erfindung sind nachstehend unter Bezugnahme auf die zugehörigen Zeichnungen näher erläutert:

Fig. 1 zeigt ein typisches Binärbild mit drei getrennten Objekten, das durch eine Bildverarbeitung ausgewertet werden soll.

Fig. 2 zeigt eine logikschaltung, die zur Bildung eines Segmentationskeimes verwendbar ist.

Fig. 3 veranschaulicht anhand des Inhalts verschiedener Register die Bildung des ersten Segmentationskeimes bei dem Binärbild von Fig.1.

Fig. 4 zeigt eine logikschaltung für die Segmentation nach einer "Vierertopologie".

Fig. 5 veranschaulicht anhand des Inhalts der verwendeten Register die Wirkungsweise der Logikschaltung.

Fig. 6 ist eine schematische Darstellung und veranschaulicht den Ablauf der Segmentation.

Fig. 6A veranschaulicht die Speicherung von Zeilenindizes zur Ansteuerung von Bildzeilen des Bildspeichers.

Fig. 6B ist eine entsprechende Darstellung bei einer etwas anderen Gestalt des Objekts.

Fig. 7 zeigt eine abgewandelte logikschaltung, mit welcher eine Segmentation nach einer "Achtertopologie" durchführbar ist.

Fig. 8 zeigt eine weitere abgewandelte Logikschaltung auf der Grundlage einer "Vierertopologie".

Fig. 9 ist eine Darstellung ähnlich Fig.5 und veranschaulicht anhand des Inhalts der Register und verschiedener Signalausgänge in der Logikschaltung die Wirkungsweise der Logikschaltung von Fig.8.

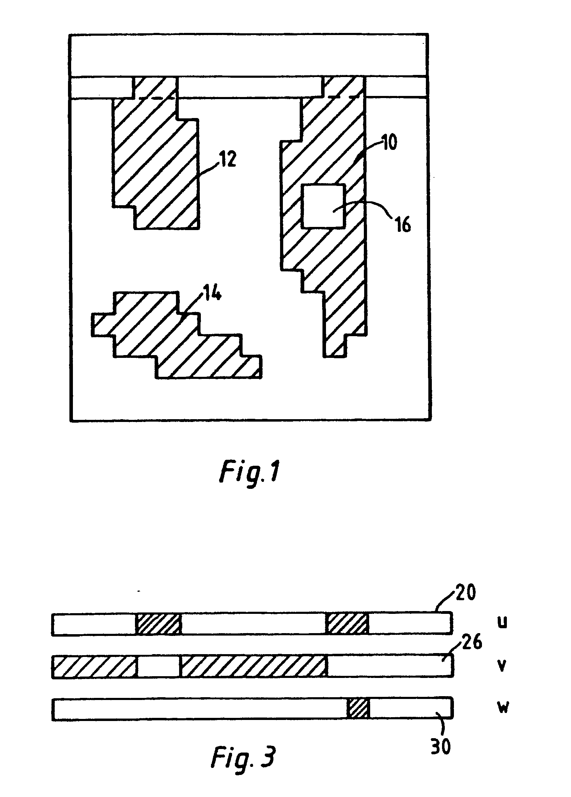

Fig.1 zeigt ein typisches Binärbild mit drei getrennten Objekten 10,12 und 14. Dieses Binärbild ist dadurch entstanden, daß Helligkeitswerte der einzelnen Bildelemente daraufhin untersucht wurden, ob sie oberhalb oder unterhalb eines vorgegebenen Schwellwerts liegen. Wenn der Helligkeitswert eines Bildelements oberhalb des Schwellwerts lag, wurde ihm der Zustand logisch "1" zugeordnet. Lag der Helligkeitswert unterhalb des Schwellwerts, wurde dem Bildelement der Zustand logisch "0" zugeordnet. Die Matrix, in welcher jedes Bildelement durch einen Zeilen- und einen Spaltenindex definiert ist, ist in einem Speicher abgespeichert. In Fig.1 symbolisieren die gestrichelt dargestellten Flächen die Bildelemente, denen eine logische "1" zugeordnet ist. Die drei Objekte 10,12 und 14 sind jeweils topologisch zusammenhängende Gebiete. In Fig.1 ist das topologische Objekt 10 mit einem "Loch" 16 versehen, also mit einem Gebiet, in welchem den Bildelementen der Zustand "0" zugeordnet ist, das aber von Bildelementen mit dem Zustand logisch "1" vollständig umgeben ist. Es gilt jetzt, die einzelnen Objekte 10,12 und 14 zu segmentieren, d.h. nacheinander alle Bildelemente zu erfassen, die zu dem Objekt 10 gehören, dann alle Bildelemente, die zu dem Objekt 12 gehören und schließlich alle Bildelemente, die zu dem Objekt 14 gehören. Zu diesem Zweck muß ein Segmentationskeim gefunden werden, also ein Bildelement, das zu einem der Objekte gehört. Ausgehend von diesem Segmentationskeim werden dann alle anderen Bildelemente daraufhin untersucht, ob sie mit dem Segmentationskeim direkt durch eine Nachbarschaftsbeziehung verbunden sind oder indirekt über andere miteinander und mit dem Segmentationskeim durch Nachbarschaftsbeziehungen verbundene Bildelemente.

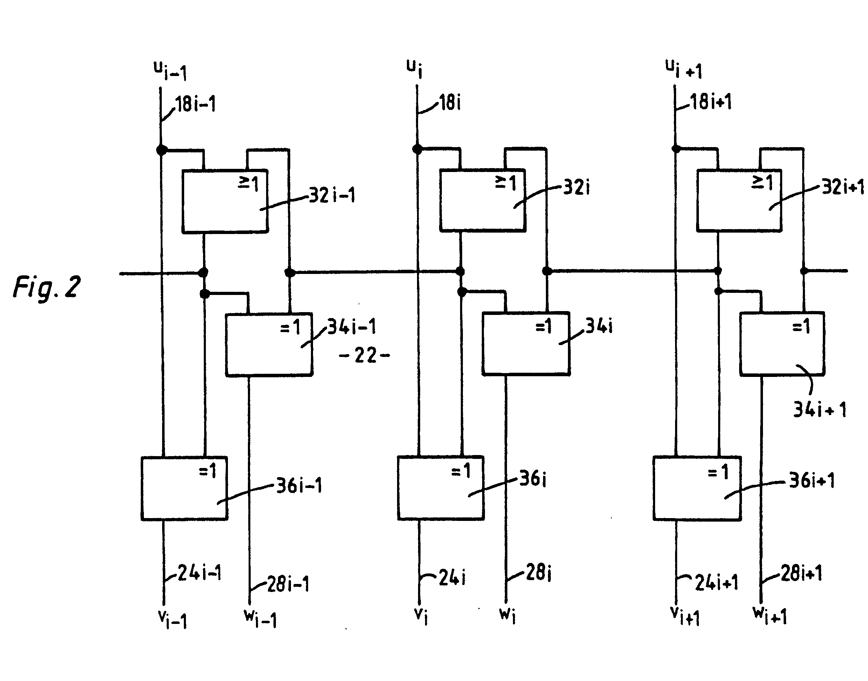

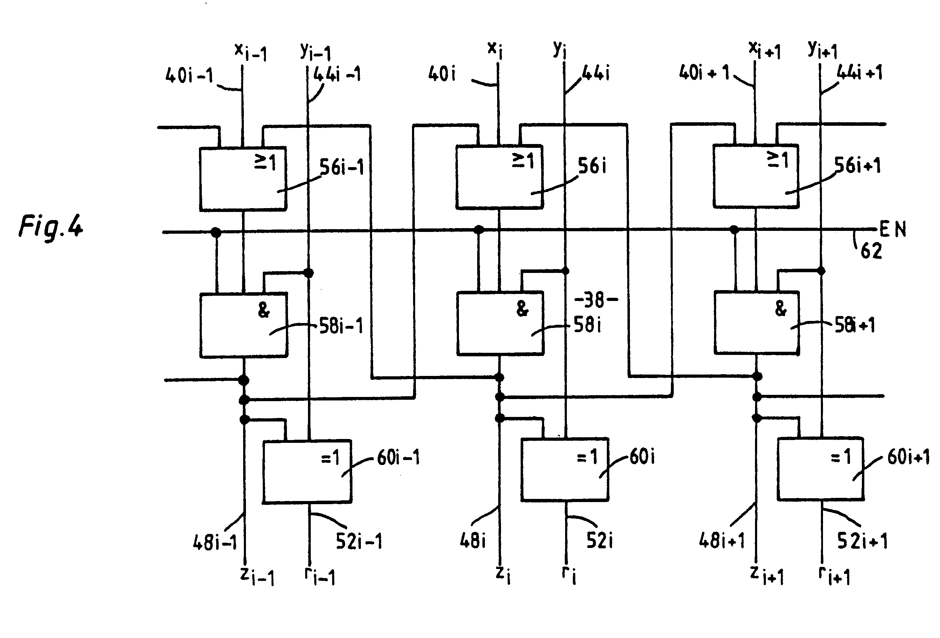

Ein Segmentationskeim wird durch eine Logikschaltung gefunden, von welcher ein Teil in Fig.2 dargestellt ist. Man kann sich vorstellen, daß sich die in Fig.2 dargestellte Schaltung in gleicher Weise nach rechts und nach links fortsetzt. Die Schaltung hat Eingänge .... 18i-1, 18i, 18i + 1..., die mit je einem Speicherelement eines "u"-Registers verbunden sind, das in Fig.3 schematisch angedeutet und mit 20 bezeichnet ist. Die festverdrahtete Logikschaltung, die generell mit 22 bezeichnet ist, weist einen ersten Satz von Ausgängen ...24i-1, 24i, 24i + 1... auf. Diese Ausgänge sind mit je einer Speicherstelle ... $v_{i-1}, v_i$ , $v_{i+1}$ .. eines "v"-Registers verbunden, das in Fig.3 mit 26 bezeichnet ist. Die Logikschaltung 22 weist weiterhin einen zweiten Satz von Ausgängen ...28i-1, 28i, 28i + 1.... auf. Jeder dieser Ausgänge ist mit einer Speicherstelle ....$w_{i-1}$, $w_i$ , $w_{i+1}$ .... eines "w"-Registers verbunden, das in Fig.3 mit 30 bezeichnet ist. Jedem Eingang ... 18i-1, 18i, 18i + 1.... ist ein ODER-Glied .... 32i-1, 32i, 32i + 1 zugeordnet. Weiterhin sind jedem Eingang ein erstes Exklusiv-ODER-Glied ....34i-1, 34i, 34i + 1.... sowie ein zweites Exklusiv-ODER-Glied ....36i-1, 36i, 36i + 1.... zugeordnet.

Die Schaltung der einzelnen logischen Glieder wird nachstehend anhand der dem Eingang 18i zugeordneten logischen Glieder 32i, 34i und 36i erläutert. Die Schaltung der den anderen Eingängen zugeordneten logischen Glieder ist entsprechend. Der Eingang 18i liegt an einem Eingang des ODER-Glieds 32i. an. An dem anderen Eingang des ODER-Glieds 32i liegt der Ausgang des rechts in Fig.2 davon angeordneten, dem Eingang 18i + 1 zugeordneten ODER-Glieds 32i + 1. Dementsprechend liegt der Ausgang des ODER-Glieds 32i an einem Eingang des ODER-Glieds 32i-1, das dem Eingang 18i-1 zugeordnet ist. Es sei angenommen, daß der Eingang 18i im Zustand "1" ist, während alle rechts von dem Eingang 18i liegenden Eingänge 18i + 1.... im logischen Zustand "0" seien. Es ist leicht einzusehen, daß in diesem Falle der Ausgang des ODER-Glieds 32i im Zustand "1" ist und ebenso die Ausgänge aller links von dem ODER-Glied 32i liegenden ODER-Glieder, und zwar unabhängig davon, welche logischen Zustände an den links von dem Eingang 18i liegenden Eingängen 18i-1... herrschen. Der Zustand logisch "1" am Ausgang des ODER-Glieds 32i überträgt sich kaskadenartig über die jeweils rechten Eingänge der ODER-Glieder 32i-1 usw. auf die ODER-Glieder nach links in Fig.2. Die Ausgänge der rechts von dem ODER-Glied 32i liegenden ODER-Glieder 32i + 1... sind null, da angenommen war, daß die Eingänge 18i + 1.... rechts von dem Eingang 18i im Zustand logisch "0" seien. Es werden also alle ODER-Glieder ...32i-1, 32i mit ihrem Ausgang in den Zustand logisch "1" gebracht bis zu demjenigen ODER-Glied 32i, das dem am weitesten rechts liegenden Eingang 18i des "u"-Registers 20 zugeordnet ist, der im Zustand logisch "1" ist.

Der Ausgang des ODER-Glieds 32i und der Eingang 18i liegen an den Eingängen eines Exklusiv-ODER-Gliedes 36i an, dessen Ausgang den Ausgang 24i zu dem "v"-Register 26 bildet. Rechts von dem Eingang 18i sind alle Eingänge 18i + 1... im Zustand logisch "0". Entsprechend sind auch die Ausgänge aller ODER-Glieder 32i + 1... im Zustand logisch "0". Die Exklusiv-ODER-Glieder 36i + 1... liefern also ebenfalls Ausgänge logisch "0". Der Ausgang des ODER-Glieds 32i war im Zustand logisch "1", und das gleiche gilt für die Ausgänge der links davon liegenden ODER-Glieder 32i-1..... An den Ausgängen 24i,24i-1... erscheinen daher jeweils die Komplemente der Signale an den Eingängen 18i,18i-1...., also des Inhalts der Speicherstellen $u_i$, $u_{i-1}$.. des "u"-Registers 20. Liegt beispielsweise am Eingang 18i-1 der Zustand logisch "1", dann sind beide Eingänge des Exklusiv-ODER-Gliedes 36i-1 im Zustand logisch "1". Der Ausgang des Exklusiv-ODER-Gliedes 36i-1 wird dadurch logisch "0".

An dem Exklusiv-ODER-Glied 34i liegt einmal der Ausgang des ODER-Glieds 32i+1 und zum anderen der Ausgang des ODER-Glieds 32i. Es war angenommen worden, daß alle Eingänge 18i+1 rechts von dem Eingang 18i im Zustand logisch "0" sind und Eingang 18i sich im Zustand logisch "1" befindet. In diesem Falle sind, wie oben erläutert wurde, der Ausgang des ODER-Glieds 32i sowie die Ausgänge sämtlicher links davon befindlichen ODER-Glieder 32i-1... im Zustand logisch "1". Das Exklusiv-ODER-Glied 34i erhält daher an einem Eingang das Signal logisch "0" vom Ausgang des ODER-Gliedes 32i+1 und an dem anderen Eingang das Signal logisch "1" vom Ausgang des ODER-Glieds 32i. Sein Ausgang, der den Ausgang 28i der Logikschaltung 22 bildet, ist daher im Zustand logisch "1". Das Exklusiv-ODER-Glied 34i+1 erhält auf beide Eingänge die Signale logisch "0". Sein Ausgang ist ebenso wie die Ausgänge aller rechts davon liegenden ersten Exklusiv-ODER-Glieder im Zustand logisch "0". Alle links von dem Exklusiv-ODER-Glied 34i liegenden Exklusiv-ODER-Glieder 34i-1.... erhalten an beiden Eingängen die Zustände logisch "1". Auch deren Ausgänge sind daher im Zustand logisch "0".

Die Logikschaltung 22 liefert also an einem Ausgang ein Signal logisch "1". Dieser Ausgang entspricht demjenigen Eingang der Logikschaltung 22, der am weitesten rechts ein Signal logisch "1" erhält. Alle anderen Ausgänge ...28i-1 und 28i+1... sind im Zustand logisch "0".

Um einen Segmentationskeim in systematischer Weise zu finden, werden nacheinander beginnend mit dem oberen Rand des Bildes von Fig.1 die Bildinformationen jeweils einer Zeile in das "u"-Register 20 übertragen. In den ersten beiden Zeilen ergeben sich keine Bildinformationen. In der dritten Zeile, die in Fig.3 dargestellt ist, liefert die Signalverarbeitung ein Bildelement im Zustand "1" in dem "w"-Register 30. Dieses Bildelement entspricht der rechten oberen Ecke des Objekts 10. Sobald ein solches Bildelement in dem "w"-Register 30 erhalten wird, wird dieses als Segmentationskeim für das zugehörige Bildobjekt, in diesem Falle Bildobjekt 10, benutzt. Ausgehend von diesem Segmentationskeim erfolgt eine Segmentation dieses Objekts 10 in der nachstehend beschriebenen Weise.

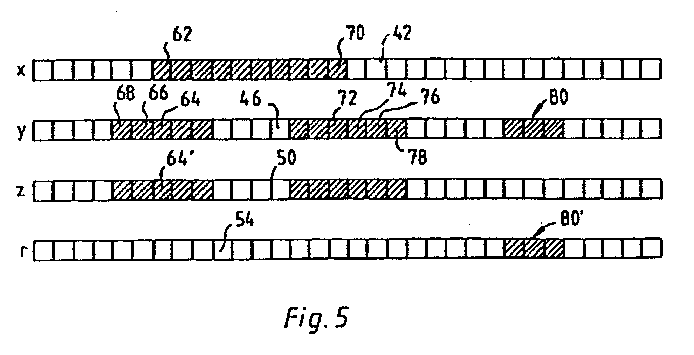

Eine Logikschaltung 38 zur Segmentation eines Objekts ist in Fig.4 dargestellt. Die Logikschaltung 38 enthält einen Satz von ersten Eingängen... 40i-1,40i,40i+1..., die mit den Speicherstellen ...x $_{i-1}$ ,x $_i$ ,x $_{i+1}$ ..... eines "x"-Registers 42 (Fig.5) verbunden sind.

Die Logikschaltung 38 enthält weiterhin einen Satz von zweiten Eingängen ....44i-1,44i,44i+1, die mit den Speicherstellen ....y$_{i-1}$ ,y$_i$ ,y$_{i+1}$ .... eines "y"-Registers 46 verbunden sind. Die Logikschaltung 38 enthält einen ersten Satz von Ausgängen ...48i-1,48i,48i+1...., die mit den Speicherstellen ....z$_{i-1}$ ,z $_i$ ,z$_{i+1}$ ..... eines "z"-Registers 50 verbunden sind. Schließlich enthält die Logikschaltung 38 einen zweiten Satz von Ausgängen ....52i-1, 52i,52i+1, die mit den Speicherstellen ....r$_{i-1}$ ,r$_i$ r $_{i+1}$ ... eines "r"-Registers 54 verbunden sind.

Jedem Paar von Eingängen und Ausgängen sind ein ODER-Glied ...56i-1,56i,56i+1..., ein UND-Glied ....58i-1,58i,58i+1.... und ein Exklusiv-ODER-Glied ....60i-1,60i,60i+1 zugeordnet. Die Schaltungsanordnung setzt sich in gleicher Weise nach links und nach rechts von Fig.4 fort. Nachstehend wird die Schaltung der den Eingängen 40i und 44i und den Ausgängen 48i und 52i zugeordneten Glieder 56i,58i und 60i beschrieben. Die Anordnung der anderen Glieder, z.B. 56i+1,58i+1 und 60i+1 ist die gleiche.

Das ODER-Glied 56i hat drei Eingänge: An einem ersten Eingang liegt der Ausgang des links davon sitzenden UND-Gliedes 58i-1. An einem zweiten Eingang liegt der Eingang 40i. An einem dritten Eingang liegt der Ausgang des rechts davon angeordneten UND-Gliedes 58i+1. Das UND-Glied 58i hat ebenfalls drei Eingänge. An einem ersten Eingang liegt ein Steuereingang 62. An einem zweiten Eingang liegt der Ausgang des ODER-Glieds 56i. An einem dritten Eingang liegt der Eingang 44i, der mit dem "y"-Register 46 verbunden ist. Der Ausgang des UND-Glieds 58i bildet den Ausgang 48i der Logikschaltung 38, der mit dem "z"-Register 50 verbunden ist. Das Exklusiv-ODER-Glied 60i hat zwei Eingänge. An dem einen Eingang liegt der Ausgang des UND-Glieds 58i. An dem anderen Eingang liegt der mit dem "y"-Register 46 verbundene Eingang 44i. Der Ausgang des Exklusiv-ODER-Gliedes 60i bildet den Ausgang 52i der Logikschaltung 38, der mit dem "r"-Register 54 verbunden ist.

Diese Schaltungsanordnung dient zur Segmentation, wobei die Nachbarschaftstests nach einer "Vierertopologie" durchgeführt werden, d.h. als zu einem betrachteten Bildelement benachbart werden nur solche Bildelemente angesehen, deren Spalten oder Zeilenindex sich von dem betrachteten Bildelement um jeweils eins unterscheidet. Nicht als benachbart angesehen werden solche Bildelemente, bei denen sich beide Indizes um eins unterscheiden. Jedes Bildelement hat somit vier benachbarte Bildelemente. Deshalb spricht man von "Vierertopologie". Betrachtet man als benachbart auch solche Bildelemente, bei denen sich beide Indizes, also Zeilen- und Spaltenindex, um eins unterscheiden, dann hat jedes Bildelement insgesamt acht benachbarte Bildelemente. Deshalb spricht man in diesem Fall von "Achtertopologie".

Die Schaltungsanordnung arbeitet wie folgt:
Die Eingänge ..44i-1,44i,44i+1... der Logikschaltung 38 sind mit den Speicherstellen ...$y_{i-1}$ ,$y_i$ y $_{i+1}$ des "y"-Registers 46 verbunden. In dieses "y"-Register 46 werden die Zustände der Bildpunkte einer betrachteten Bildzeile eingegeben. Die Eingänge ...40i-1,40i,40i+1.... der Logikschaltung 38 sind mit den Speicherstellen ...$x_{i-1}$ ,$x_i$ ,$x_{i+1}$ des "x"-Registers 42 verbunden. In dieses "x"-Register 42 werden die Zustände der Bildpunkte einer zu der betrachteten Zeile benachbarten, schon segmentierten Zeile eingegeben. Das bedeutet, daß im "x"-Register nur diejenigen Bildpunkte in den Zustand "1" gesetzt sind, die schon als zu dem segmentierenden Objekt gehörig erkannt sind. An dem Signaleingang 62 liegt während der normalen Funktion der Logikschaltung 38 das Signal logisch "1". Wenn sowohl x $_i$ als auch y $_i$ an den Eingängen 40i bzw. 44i im Zustand logisch "1" sind, ist auch der Ausgang des UND-Gliedes 58i im Zustand logisch "1".

Im "z"-Register 50 wird über den Ausgang 48i die Speicherstelle z $_i$ in den Zustand logisch "1" gebracht. Das gilt natürlich für alle Bildpunkte, bei denen in der gleichen Spalte ein Bildpunkt im "y"-Register und ein Bildpunkt im "x"-Register in den Zustand logisch "1" gesetzt sind. In das "z"-Regi ster werden daher auf diese Weise sämtliche direkten Nachbarn der zu dem Objekt gehörigen Bildpunkte der auf das "x"-Register 42 übertragenen Bildzeile übertragen. Am Eingang des ODER-Gliedes 56i liegt aber auch der Ausgang des UND-Gliedes 58i+1. Am Eingang des ODER-Gliedes 56i+1 liegt wiederum der Ausgang des rechts von dem UND-Glied 58i+1 liegenden UND-Gliedes (58i+2) usw. Wenn also ein Ausgang eines UND-Gliedes z.B. 58i im Zustand logisch "1" ist, dann werden auch die Ausgänge der links davon angeordneten UND-Glieder in den Zustand logisch "1" gebracht, sofern ohne Unterbrechung die zugehörigen Speicherplätze $y_{i-1}$ ... des "y"-Registers 46 im Zustand logisch "1" sind. Das gleiche gilt für die rechts von einem solchen UND-Glied, z.B. 58i liegenden UND-Glied 58i+1.... In das "z"-Register werden daher nicht nur diejenigen im Zustand logisch "1" befindlichen Bildpunkte aus dem "y"-Register 46 übertragen, zu denen in der gleichen Zeile ein im Zustand logisch "1" befindlicher Bildpunkt des "x"-Registers liegt, sondern auch alle Bildpunkte aus dem "y"-Register, die sich an einen solchen Bildpunkt in ununterbrochener Folge anschließen. Das ist in Fig.5 an einem Beispiel gezeigt: Die Punkte 62 und 64 im "x"-Register 42 bzw. im "y"-Register 46 liegen in der gleichen Spalte und sind beide im Zustand logisch "1". Infolgedessen wird der Bildpunkt 64 als Bildpunkt 64' im "z"-Register in den Zustand logisch "1" gesetzt. Die Bildpunkte 66 und 68 im "y"-Register 46 haben keine entsprechende, auf 1 gesetzte Bildpunkte im "x"-Register 42. Es grenzt aber der Bildpunkt 66 an den Bildpunkt 64 und der Bildpunkt 68 wiederum an den Bildpunkt 66 an. Da das zu dem Bildpunkt 64 gehörige UND-Glied an seinem Ausgang eine logische 1 liefert, liefert auch das zu dem Bildpunkt 66 gehörige UND-Glied an seinem Ausgang eine logische 1. Das bewirkt wieder eine logische 1 an dem Ausgang des zu dem Bildpunkt 68 gehörigen UND-Glieds. Entsprechend sind die Verhältnisse mit den Bildpunkten 70 und 72 und den daran anschließenden Bildpunkten 74,76 und 78. Alle diese auf logisch "1" gesetzten Bildpunkte 72,74,76 und 78 werden auch im "z"-Register 50 auf logisch "1" gesetzt, obwohl sie wiederum nicht mit den Bildpunkten 64,66,68 zusammenhängen. Nicht in das "z"-Register 50 übertragen wird die Gruppe 80 von auf logisch "1" gesetzten Bildpunkten im "y"-Register 46, die weder einen korrespondierenden Bildpunkt im "x"-Register 42 besitzt noch mit den Bildpunkten 72 bis 78 zusammenhängt.

Die Gruppe 80 von auf logisch "1" gesetzten Bildpunkten wird jedoch über die entsprechenden Ausgänge ...52i-1,52i,52i+1... auf das "r"-Register 54 als Gruppe 80' übertragen. Bei diesen Bildpunkten liegt nämlich an dem Exklusiv-ODER-Glied, z.B. 60i, ein Signal logisch "1" vom Eingang 44i, da y $_i$ im Zustand logisch "1" ist. An dem anderen Eingang des Exklusiv-ODER-Glieds 60i liegt von dem UND-Glied 58i logisch "0". Der Ausgang des Exklusiv-ODER-Glieds 60i, der mit dem Ausgang 52 $_i$ der Logikschaltung 38 übereinstimmt, ist daher im Zustand logisch "1".

Über den Steuereingang 62 wird zu Beginn jeder Zeilenverarbeitung der Inhalt des "z"-Registers 50 auf null gesetzt.

Die Segmentation erfolgt zeilenweise ausgehend von dem Segmentationskeim. Dabei werden die Bildinformationen einer schon segmentierten Bildzeile in das "x"-Register 42 eingegeben. In das "y"-Register 46 werden nacheinander die Bildinformationen der nächstfolgenden und der vorhergehenden Bildzeile eingegeben. Dabei werden in dem Binärbild alle auf "1" gesetzten Bits gelöscht, die schon als zu dem Objekt gehörig erkannt sind. Diese werden in einem Pufferspeicher abgespeichert. Zu diesem Zweck wird nach Segmentierung jeder Zeile der Inhalt des "r"-Registers in die betreffende "Zelle" des Binärbildspeichers übertragen und der Inhalt des "z"-Registers in die betreffende Zeile des Pufferspeichers.

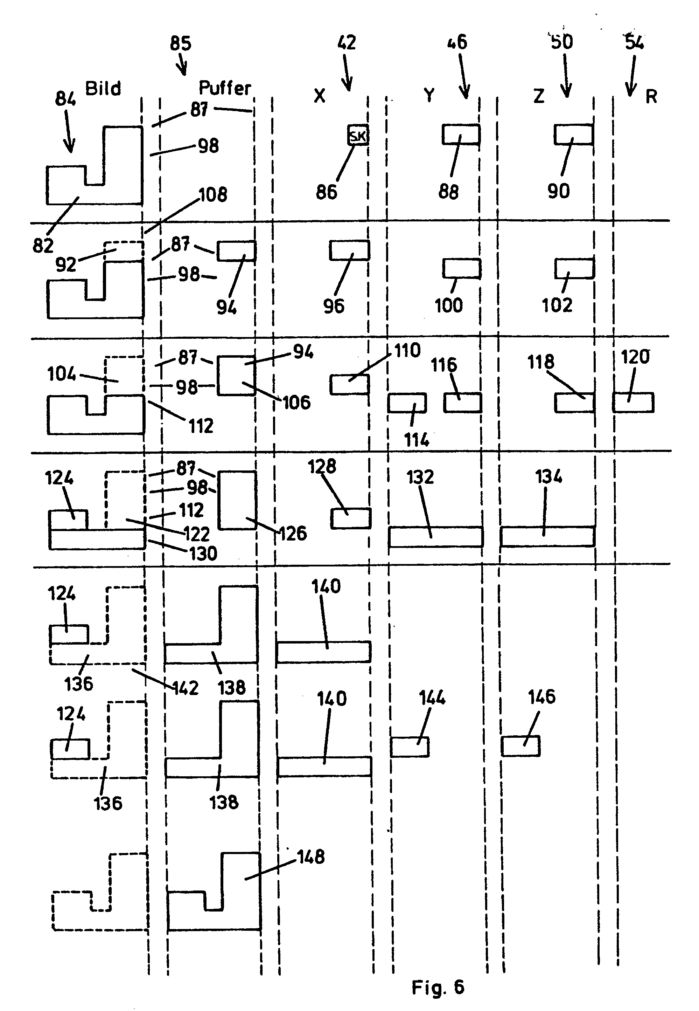

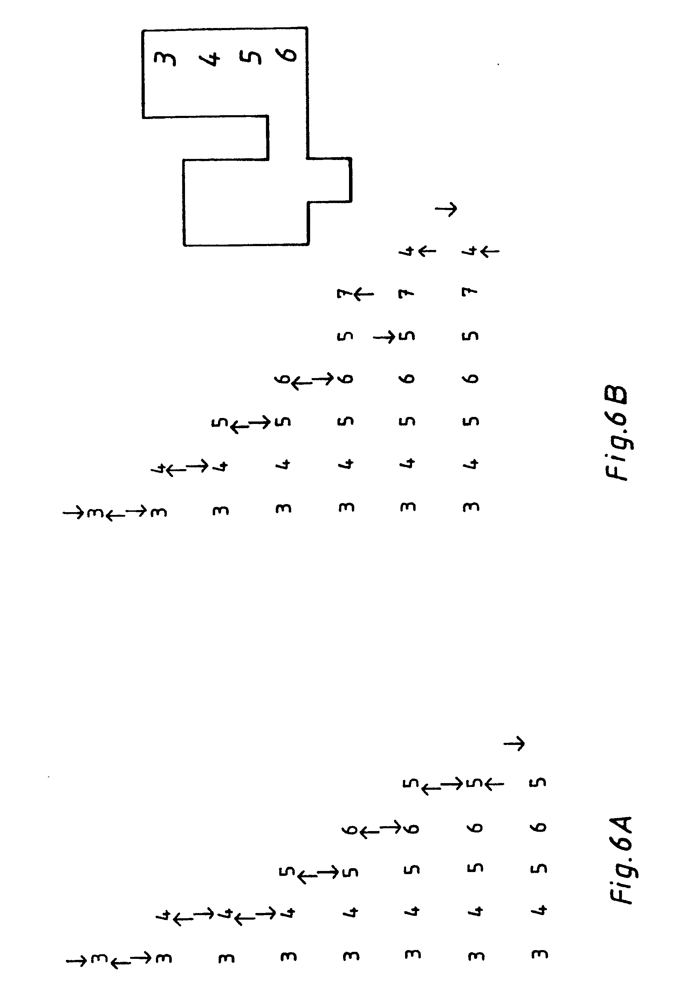

Der Ablauf der Segmentation ist nachstehend unter Bezugnahme auf Fig.6 an einem einfachen Beispiel erläutert.

In Fig.6 ist in der ersten Spalte der jeweilige Inhalt des Bildspeichers dargestellt. In der zweiten Spalte ist der Inhalt eines Pufferspeichers 85 dargestellt. Die nachfolgenden Spalten zeigen die Inhalte der "x"-, "y"-, "z"- und "r"-Register.

Das Objekt hat die in Fig.6 bei 82 dargestellte Gestalt. Diese ist als Muster von logischen Einsen und logischen Nullen in dem Bildspeicher 84 gespeichert. Durch die Logikschaltung nach Fig.2 ist ein Segmentationskeim 86 erhalten und im "x"-Register gespeichert worden. Bei der zeilenweisen Abtastung des Binärbildes wird schließlich nach einigen leeren Zeilen, in denen kein Bildelement in Zustand logisch "1" ist, die Zeile 87 erreicht und deren Inhalt in das "y"-Register 46 übertragen. Das liefert die Gruppe 88 von auf logisch "1" gesetzten Speicherstellen im "y"-Register 46. Die Logikschaltung 38 von Fig.4 prüft die (vorhandene) Nachbarschaft dieser Gruppe 88 mit dem Segmentationskeim 86 und überträgt diese Gruppe als Gruppe 90 in das "z"-Register 50. In dem "r"-Register 54 werden keine Speicherstellen gesetzt.

Als nächster Schritt wird der Inhalt des "r"-Registers 54 in die betreffende Zeile des Bildspeichers 84 übertragen. Das bedeutet, daß die gestrichelt umrandeten Bits 92 im Bildspeicher 84 gelöscht werden. Der Inhalt des "z"-Registers 50 wird in die betreffende "Zelle" des Pufferspeichers 85 übertragen (in einer ODER-Verknüpfung mit dem schon vorhandenen Inhalt des Pufferspeichers 85). Das ergibt die Gruppe 94 von gesetzten Bits in der zweiten Zeile von Fig.6.

Der Inhalt des Pufferspeichers 85 wird nun als neuer Segmentationskeim als Gruppe 96 von gesetzten Speicherstellen in das "x"-Register 42 übertragen. In das "y"-Register 46 wird nun zunächst die nächstfolgende Zeile 98 aus dem Bildspeicher 84 übertragen, wo sie eine Gruppe 100 von gesetzten Speicherstellen bildet. Wiederum prüft die Logikschaltung 38 die Nachbarschaftsbeziehung zu den segmentierten Bildpunkten der Bildzeile 86 und überträgt die Gruppe 100 als Gruppe 102 in das "z"-Register 50. In dem "r"-Register 54 werden auch in dieser Zeile keine Speicherstellen auf "1" gesetzt.

Die Übertragung des Inhalts des "r"-Registers 54 auf die Zeile 98 des Bildspeichers 84 löscht dort die Bildpunkte 104. Die Übertragung des Inhalts des "z"-Registers 50 auf Zeile 98 des Pufferspeichers 85 setzt dort die Speicherstellen 106 auf logisch "1". Das ist der Zustand in der dritten Zeile von Fig.6.

Es wird nun mittels der Logikschaltung 38 ein Nachbarschaftstest mit der vorhergehenden Bildzeile 108 durchgeführt. Dieser Nachbarschaftstest bringt aber keine Veränderung, da in dieser Zelle keine Bildelemente im Zustand logisch "1" sind. Dieser Nachbarschaftstest ist daher in Fig.6 nicht dargestellt.

In das "x"-Register 42 werden die segmentierten Bildpunkte 106 aus Zelle 98 des Pufferspeichers 85 übertragen. Das ergibt die Gruppe 110 von gesetzten Speicherstellen. In das "y"-Register 46 werden die Bildinformationen aus der nächstfolgenden Zeile 112 des Bildspeichers 84 übertragen. Das ergibt die beiden Gruppen 114 und 116 von auf logisch "1" gesetzten Speicherstellen. Der durch die Logikschaltung 38 durchgeführte Nachbarschaftstest bewirkt eine Übertragung der Gruppe 116 (als segmentiert) auf das "z"-Register 50 in Form der Gruppe 118 und der Gruppe 114 (als vorläufig nicht segmentiert) in das "r"-Register 54 in Form der Gruppe 120.

Auch hier bringt ein Nachbarschaftstest mit der vorhergehenden Bildzeile 87 keine Veränderung. Es ist zu beachten, daß die Gruppe von Bildpunkten 92 im Bildspeicher 84 gelöscht worden war, so daß Zeile 86 im Bildspeicher jetzt leer ist.

Die Übertragung des Inhalts des "r"-Registers 54 auf die Bildzeile 112 des Bildspeichers 84 löscht die segmentierten Bildpunkte 122, läßt aber die Bildpunkte 124 - entsprechend der Gruppe von auf "1" gesetzten Speicherplätzen 120 - bestehen. Im Pufferspeicher 85 werden aus dem "z"-Register 50 die Bildpunkte 126 entsprechend der Gruppe von auf "1" gesetzten Speicherplätzen 118 neu gesetzt. Das ist in der vierten Zeile von Fig.6 dargestellt.

Aus dem Pufferspeicher 85 werden jetzt die Bildpunkte 126 als Gruppe 128 im "x"-Register 42 gesetzt. Aus dem Bildspeicher 84 wird die nächstfolgende Zeile 130 in das "y"-Register 46 übertragen. Das ergibt die Gruppe 132 von auf "1" gesetzten Speicherplätzen. Der von der Logikschaltung 38 durchgeführte Nachbarschaftstest setzt eine entsprechende Gruppe 134 von Speicherstellen im "z"-Register 50. Keine Speicherstellen werden im "r"-Register 54 gesetzt.

Die Übertragung des Inhalts des "r"-Registers 54 auf Zeile 130 des Bildspeichers 84 löscht die Bildpunkte 136. Die Übertragung des Inhalts des "z"-Registers 50 auf Zelle 130 des Pufferspeichers 85 liefert dort die Bildpunkte 138. Das ist in der fünften Zeile von Fig.6 dargestellt. Die Bildpunkte 138 werden in das "x"-Register 42 als Gruppe 140 von auf logisch "1" gesetzten Speicherstellen übertragen.

Ein durch die Logikschaltung 38 durchgeführter Nachbarschaftstest für die nächstfolgende Zeile 142 liefert jetzt keine Veränderungen, da in dieser Zeile 142 keine Bildpunkte im Zustand logisch "1" sind. Das ist ebenfalls in der fünften Zeile von Fig.6 dargestellt. Dagegen erkennt jetzt ein für die vorhergehende Zeile 112 durch die Logikschaltung 38 durchgeführter Nachbarschaftstest, daß auch die Bildpunkte 124 zu dem Objekt 82 gehören. Werden die Bildpunkte 138 aus dem Pufferspeicher 85 als Gruppe 140 in das "x"-Register 42 übertragen und die Bildpunkte 124 aus dem Bildspeicher 84 als Gruppe 144 in das "y"-Register 46, so liefert die Logikschaltung 38 eine entsprechende Gruppe 146 von auf logisch "1" gesetzten Speicherstellen im "z"-Register 50. Im "r"-Register 54 wird nichts gesetzt. Das ist in der sechsten Zeile von Fig.6 dargestellt.

Wenn der Inhalt des "r"-Registers 54 wieder in die Zeile 112 des Bildspeichers 84 und der Inhalt des "z"-Registers 50 in die Zeile 112 des Puffer- speichers 85 übertragen wird, dann ist das Objekt 82 im Bildspeicher 84 vollständig gelöscht und dafür vollständig im Pufferspeicher 85 gespeichert. Das zeigt die siebente Zeile von Fig.6. Es ist in Fig.6 der Übersichtlichkeit halber nur ein Objekt dargestellt. Es ist aber leicht einzusehen, daß ein zweites Objekt und weitere von dem Objekt 82 getrennte Objekte mit ihren Bildpunkten jeweils im "r"-Register 54 erscheinen, wie oben im Zusammenhang mit Fig.4 und 5 schon erläutert wurde, und daher jeweils mit dem Inhalt des "r"-Registers wieder in den Bildspeicher 84 übertragen werden. Nach Durchführung der Segmentation für das Objekt 82 sind daher alle anderen Objekte weiter im Bildspeicher 84 enthalten. Aus diesen anderen Objekten kann dann mit der Logikschaltung 22 von Fig.2 ein Segmentationskeim für das nächste zu segmentierende Objekt gebildet und dieses dann in gleicher Weise, wie es oben beschrieben ist, segmentiert werden. Das im Pufferspeicher 85 gespeicherte Objekt 148 wird weiterer Bildverarbeitung unterworfen.

Fig. 6A veranschaulicht die Steuerung der zeilenweisen Abtastung und Verarbeitung der Informationen des Bildspeichers 84.

Die Steuerung der zeilenweisen Abtastung des Bildspeichers 84 erfolgt mittels eines (nicht dargestellten) FIFO-Speichers, in welchem eine "Liste" mit Zeilenindizes von Bildzeile geführt wird. Es werden die Zeilenindizes derjenigen Bildzeilen in dem FIFO-Speicher gespeichert, für die im Rahmen der Segmentation Bildpunkte vom Bildspeicher in den Pufferspeicher übertragen wurden. Die Zeilenindizes treten dabei in der Reihenfolge auf, in der die Zeilen des Binärbildes 84 in das y-Register 46 eingelesen werden. Gleiche Indizes können mehr als einmal in der "Liste" vertreten sein.

Der erste Zeilenindex, der in den FIFO-Speicher eingegeben wird, ist der Zeilenindex der Bildzeile (im vorliegenden Beispiel Bildzeile, 87 in Fig.6), die den ersten mit Hilfe der Logikschaltung von Fig.2 bestimmten Segmentationskeim enthält. Es sei angenommen, daß dies im vorliegenden Beispiel die Bildzeile mit dem Zeilenindex "3" ist. Es werden, wie oben im Zusammenhang mit Fig.6 geschildert, alle Bildpunkte bestimmt, die innerhalb der gleichen Zeile liegen und mit dem Segmentationskeim direkt oder indirekt benachbart sind. Es ergibt sich der Zustand des FIFO-Speichers, wie er in der ersten Zeile von Fig.6A dargestellt ist. Der untere Pfeil gibt die Speicherplätze an, in welchen als letztes ein Zeilenindex gespeichert wurde, weil in der betreffenden Zeile zum Objekt gehörende Bildpunkte festgestellt wurden. Der obere Pfeil gibt die Zeile an, deren segmentierte Bildpunkte jeweils als Segmentationskeime für die Überprüfung der benachbarten Zeilen dienen.

Ausgehend von dem Zeilenindex "3" wird der Zeilenindex einmal um 1 vermindert, was zu dem Zeilenindex "2" führt. In der Bildzeile mit dem Zeilenindex "2" sind keine Bildpunkte enthalten, die zu dem Objekt 82 gehören. Dieser Zeilenindex wird also nicht in den FIFO-Speicher übernommen. Es wird daraufhin der Zeilenindex um 1 erhöht, was zu dem Zeilenindex "4" für Bildzeile 98 in Fig.6 führt. Ein Vergleich mit Bildzeile 87 (Zeilenindex "3") zeigt, daß die Bildzeile 98 Bildpunkte des Objekts 82 enthält. Es wird also der Zeilenindex "4" dieser Bildzeile in dem FIFO-Speicher gespeichert, wie in der zweiten Zeile von Fig.6A dargestellt ist. Es wird jetzt ausgehend von der Bildzeile 98 der Zeilenindex wieder um 1 vermindert bzw. erhöht und es werden diese Bildzeilen in entsprechender Weise mit den als Segmentationskeime dienenden Bildpunkten der Bildzeile 98 in Beziehung gesetzt. Das ist durch das Vorrük- ken des oberen Pfeils in Fig.6A angedeutet.

Bei dem in Fig.6 dargestellten Beispiel ergibt sich in dem FIFO-Speicher die in Fig.6A dargestellte Abfolge.

Man erkennt, daß im Anschluß an den Zeilenindex "6" entsprechend Zeile 130 wieder der Zeilenindex 6-1 = "5" erscheint. Wenn dann die zur Bildzeile 112 mit der Gruppe 124 von Bildpunkten benachbarten Bildzeilen 98 bzw. 130 mit der Bild- zeile 112 auf Nachbarschaftsbeziehungen unter- sucht werden, dann finden sich in diesen Bildzeilen keine zu dem Objekt gehörigen Bildpunkte mehr. Es werden daher keine Zeilenindizes mehr in den FIFO-Speicher eingelesen. Der untere Pfeil bleibt in der symbolischen Darstellung auf der "5" stehen. Der obere "Pfeil" wird schließlich einen Schritt weitergeschaltet als der untere "Pfeil", wie in der letzten Zeile von Fig.6A dargestellt ist. Das ist das Abbruchkriterium, welches anzeigt, daß das Objekt vollständig segmentiert ist.

Fig.6B zeigt ein abgewandeltes Objekt, bei welchem in den Bildzeilen mit den Zeilenindizes "4" und "7" zusätzliche Bildpunkte enthalten sind, und in ähnlicher Darstellung wie in Fig.6A die zugehörige Abfolge der im FIFO-Speicher gespeicherten Zeilenindizes.

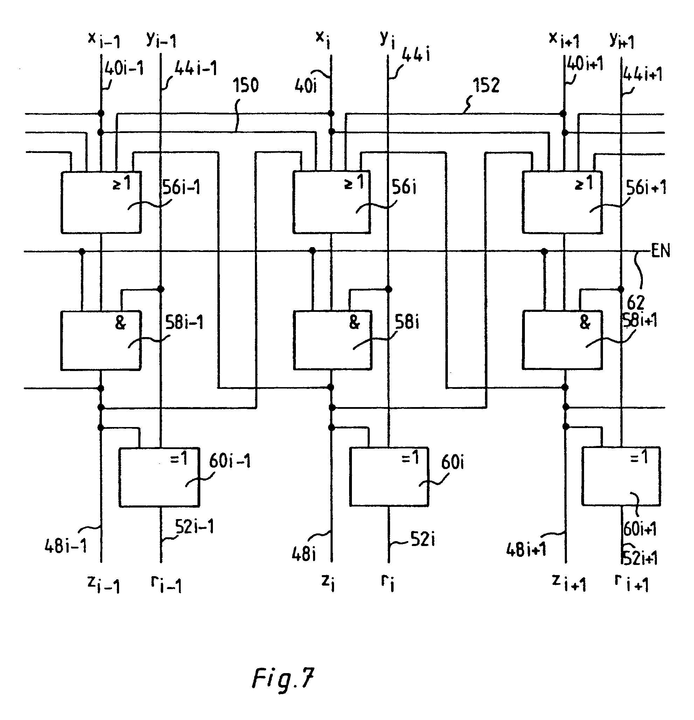

Fig.7 zeigt eine abgewandelte Logikschaltung, in welcher eine Segmentation nach einer "Achtertopologie" durchführbar ist.

Die Logikschaltung von Fig.7 ist ähnlich aufgebaut wie die Logikschaltung 38 von Fig.4. Entsprechende Teile sind mit den gleichen Bezugszeichen versehen wie dort. Auch die Wirkungsweise der Logikschaltung von Fig.7 ist hinsichtlich der Berücksichtigung der vier an einen jeweils betrachteten Bildpunkt unmittelbar angrenzenden Bildpunkte die gleiche wie dort. Gegenüber der Logikschaltung von Fig.4 haben jedoch die ODER-Glieder ....56i-1,56i,56i+1 noch je zwei zusätzliche Eingänge. Der eine dieser Eingänge z.B. des ODER-Glieds 56i ist über eine Leitung 150 mit dem "links" davon liegenden Eingang 40i-1 der Logikschaltung verbunden. Der andere der zusätzlichen Eingänge ist über eine Leitung 152 mit dem "rechts" davon liegenden Eingang 40i+1 der Logikschaltung verbunden. Der Ausgang jedes ODER-Gliedes, z.B. 56i, ist daher auch dann logisch "1", wenn der Eingang 40i-1 oder der Eingang 40i+1 im Zustand logisch "1" ist und nicht nur, wenn der Eingang 40i im Zustand logisch "1" ist. Am UND-Glied 58i liegt über den Eingang 44i der Zustand der Speicherstelle $y_i$ des "y"-Registers an, in welchem eine Bildzeile gespeichert ist, deren Zeilenindex sich vom Zeilenindex der im "x"-Register gespeicherten Bildzeile um eins unterscheidet. Die Zustände der Speicherstellen $x_i$ und $y_i$ sind durch das UND-Glied 58i miteinander verknüpft. Durch die Leitungen 150 und 152 wird der Ausgang des UND-Glieds 58i z.B. auch dann logisch "1", wenn die Speicherstelle $y_i$ am Eingang 44i und die Speicherstelle $x_{i-1}$ am Eingang 40i-1 im Zustand logisch "1" sind.

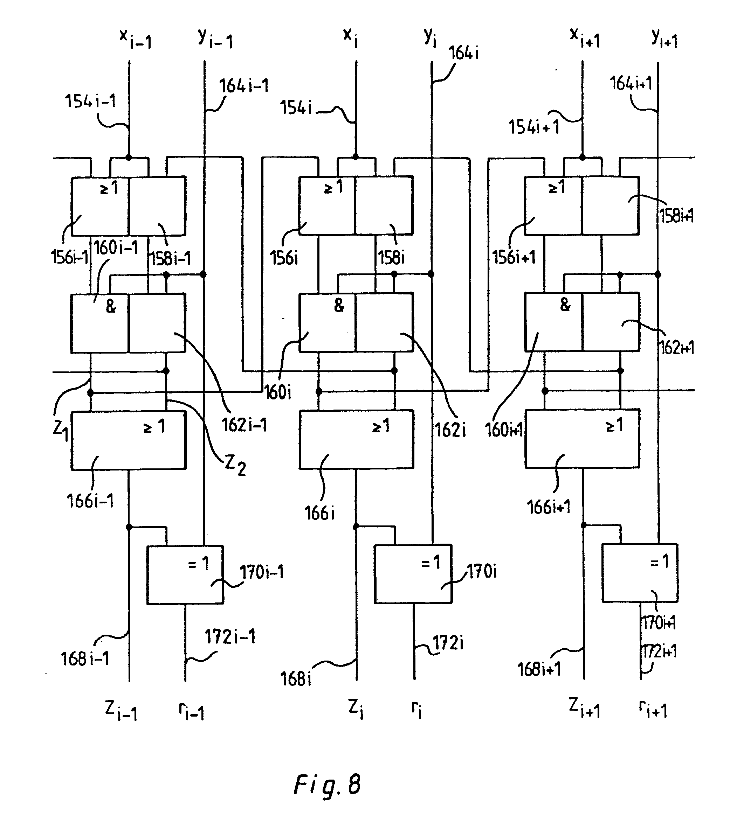

Bei der Ausführung nach Fig.4 muß das "z"-Register nach jedem Signalverarbeitungsvorgang über den Steuereingang 62 wieder auf null gesetzt werden. Das ist erforderlich, weil bei der Logikschaltung 38 die Zustände des "z"-Registers 50 auf die Eingänge der ODER-Glieder ...56i-1,56i,56i+1... zurückgeführt sind. Fig.8 zeigt eine Logikschaltung mit der gleichen Funktion wie die Logikschaltung 38 von Fig.4, bei welcher aber eine solche Nullsetzung des "z"-Registers 50 nicht erforderlich ist.

Bei der Logikschaltung von Fig.8 sind jedem der mit dem "x"-Register verbundenen Eingänge ...154i-1, 154i,154i+1... zwei ODER-Glieder ...156i-1 und 158i-1, 156i und 158i, 156i+1 und 158i+1... zugeordnet. Weiterhin sind jedem dieser Eingänge ...154i-1,154i,154i+1... je zwei UND-Glieder ...160i-1 und 162i-1, 160i und 162i, 160i+1 und 162i+1... zugeordnet. An einem Eingang der UND-Glieder ... 160i-1,160i,160i+1... liegt jeweils der Ausgang des einen ODER-Glieds ...156i-1,156i bzw. 156i+1.... An einem Eingang des jeweils anderen UND-Glieds ...162i-1,162i,162i+1... liegt jeweils der Ausgang des anderen ODER-Glieds ...158i-1,158i,158i+1... Ein zweiter Eingang jedes der UND-Glieder ...160i-1 und 162i-1, 160i und 162i, 160i+1 und 162i+1 ist mit einem Eingang ...164i-1,164i,164i+1... der Logikschaltung verbunden, der mit jeweils einer Speicherstelle des "y"-Registers 46 verbunden ist.

Der Ausgang des UND-Glieds 162i ist mit einem zweiten Eingang des ODER-Glieds 158i-1 verbunden. Entsprechend ist der Ausgang des UND-Gliedes 160i mit einem zweiten Eingang des ODER-Gliedes 156i+1 verbunden. Entsprechend ist die Verbindung der UND- und ODER-Glieder nach rechts und links von dem in Fig.8 dargestellten Teil der Logikschaltung. Die Ausgänge zusammengehöriger UND-Glieder ...160i-1 und 162i-1,160i und 162i, 160i+1 und 162i+1... sind mit je einem Eingang eines ODER-Gliedes 166i-1,166i, 166i+1... verbunden. Die Ausgänge der ODER-Glieder ...166i-1,166i,166i+1... bilden die Ausgänge ...168i-1,168i,168i+1... der Logikschaltung, die mit den entsprechenden Speicherstellen ...$z_{i-1}$,$z_i$,$z_{i+1}$... des "z"-Registers 50 verbunden sind.

Weiterhin ist jedem Eingang ...164i-1,164i, 164i+1... ein Exklusiv-ODER-Glied ...170i-1, 170i,170i+1... zugeordnet. An einem Eingang des Exklusiv-ODER-Gliedes, z.B. 170i, liegt der Eingang 164i an. An dem anderen Eingang des Exklusiv-ODER-Gliedes 170i liegt der Ausgang des ODER-Gliedes 166i also der Ausgang 168i der Logikschaltung. Die Ausgänge der Exklusiv-ODER-Glieder ...170i-1,170i,170i+1... bilden die Ausgänge ...172i-1,172i,172i+1..., die mit den Speicherstellen des "r"-Registers 54 verbunden sind.

Bei dieser Anordnung sind jeweils die Verknüpfungen nach "rechts" getrennt von den Verknüpfungen nach "links". Bei der Logikschaltung von Fig.7 ist beispielsweise der Ausgang des UND-Gliedes 58i-1 mit einem Eingang des ODER-Gliedes 56i nach rechts hin verbunden. Gleichzeitig ist der Ausgang des UND-Gliedes 58i nach links hin zum Eingang des ODER-Gliedes 56i-1 verbunden. Damit ergibt sich unter Umständen eine Art "Selbsthaltung". Diese muß durch das Steuersignal am Eingang 62 unterbrochen werden. Bei der Ausführungsform nach Fig. 8 ist der Ausgang des UND-Gliedes 160i-1 mit dem ODER-Glied 156i verbunden. Andererseits ist der Ausgang des UND-Gliedes 162i, das nicht mit ODER-Glied 156i-1 verbunden ist, mit dem ODER-Glied 158i-1 verbunden, das wiederum in keiner Beziehung zu dem UND-Glied 160i-1 steht. Bei dieser Schaltung braucht daher nur die Information in das "x"-Register 42 und das "y"-Register 46 geladen zu werden, worauf nach Ablauf der Gatterlaufzeiten das Ergebnis unmittelbar an den Ausgängen zum "z"-Register 50 und "r"-Register 54 anliegt.

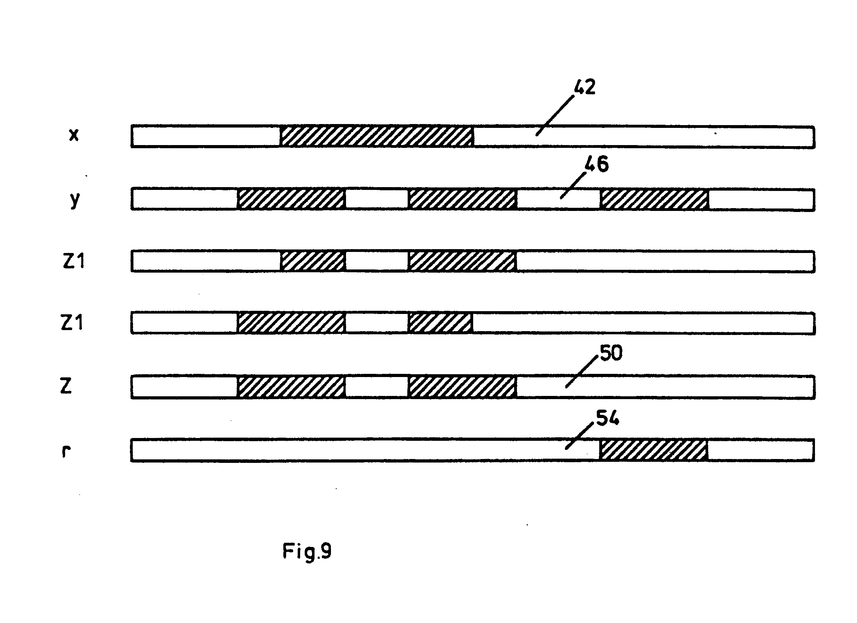

In Fig.9 sind für ein Beispiel die Inhalte der verschiedenen Register bei der Schaltungsanordnung nach Fig.8 dargestellt. Außerdem sind die Ausgänge z1 und z2 der UND-Glieder ...160i-1,160i,160i+1... bzw. ...162i-1,162i,162i+1... dargestellt. Man erkennt, daß in z1 nur Nachbarschaften von "links" her berücksichtigt sind. In z2 sind nur Nachbarschaften von "rechts" her berücksichtigt. Der Ausgangszustand z ist dann wieder der gleiche wie bei Fig.7.

Generell arbeitet die Anordnung in gleicher Weise wie die Anordnung von Fig.4.

## Ansprüche

1. Schaltungsanordnung zur Segmentation eines aus Zeilen und Spalten zusammengesetzten Binärbildes, enthaltend

(a) einen Bildspeicher (84) zur Speicherung des Binärbildes,

(b) Mittel (22) zur Bestimmung eines Segmentationskeimes (86) und

(c) Mittel (38) zum Prüfen, ob ein Bildelement dem Segmentationkeim direkt oder über eine ununterbrochene Kette von einander benachbarten Bildelementen verbunden ist,

gekennzeichnet durch

(d) ein erstes Register (42) für jeweils eine volle Zeile des Binärbildes,

(e) ein zweites Register (46) für jeweils eine volle Zeile des Binärbildes,

(f) Mittel zum Laden des ersten Registers (42) während eines Abtastzyklus mit Bildelementen einer betrachteten Zeile, die als zugehörig zu dem Objekt (82) erkannt sind, zu dem der Segmentationskeim (86) gehört,

(g) Mittel zum Laden des zweiten Registers (46 während des besagten Abtastzyklus mit Bildelementen einer zu der jeweils betrachteten Zeile (z.B. 87) benachbarten Zeile (98) des Binärbildes,

(h) eine festverdrahtete Logikschaltung (Fig.4) mit

(h$_1$) einem Satz von ersten Schaltungseingängen (40i-1, 40i, 40i + 1), die mit je einer Speicherstelle des ersten Registers (42) verbunden sind,

(h$_2$) einem Satz von zweiten Schaltungseingängen (44i-1, 44i, 44i-1), die mit je einer Speicherstelle des zweiten Registers (46) verbunden sind,

(h$_3$) einem Satz von Schaltungsausgängen (48i-1, 48i, 48i + 1) und

(h$_4$) einer Folge von Verknüpfungseinheiten (56i-1, 58i-1; 56i-1, 58i, 56i + 1, 58i + 1 bzw. 156i-1, 158i-1, 160i-1, 162i-1, 166i-1; 156i, 158i, 160i, 162i, 166i; 156i + 1, 158i + 1, 160i + 1, 162i + 1, 166i + 1), denen je einer der ersten und der zweiten Schaltungseingänge und einer der Schaltungsausgänge zugeordnet ist und von denen jede weitere Eingänge aufweisen, die mit Objektzugehörigkeit signalisierenden Ausgängen der jeweils benachbarten Verknüpfungseinheiten verbunden sind, wobei

- jeder Schaltungsausgang stets dann kein einem objektzugehörigen Bildelement entsprechendes Signal liefert, wenn kein objektentsprechendes Signal an dem zugehörigen zweiten Schaltungseingang anliegt,

- der Schaltungsausgang jeder Verknüpfungseinheit ein einem objektzugehörigen Bildelement entsprechendes Signal liefert, wenn

- ein objektentsprechendes Signal an dem zugehörigen zweitren Schaltungseingang anliegt und

- ein solches Signal an dem ersten Schaltungseingang oder an wenigstens einem der weiteren Eingänge anliegt.

2. Schaltungsanordnung nach Anspruch 1, dadurch gekennzeichnet, daß

(a) ein Pufferspeicher (85) vorgesehen ist, in welchem ein Binärbild eines segmentierten Objekts aus dem Binärbild des Bildspeichers (84) speicherbar ist,

(b) durch die besagten Mittel zum Laden des ersten Registers (42) eine Bildzeile aus dem Pufferspeicher (85) auf das erste Register (42) übertragbar ist,

(c) eine der besagten Bildzeile benachbarte Bildzeile aus dem Bildspeicher in das zweite Register (46) übertragbar ist,

(d) ein drittes Register (50) und

(e) ein viertes Register (54) vorgesehen sind,

(f) die Logikschaltung (38) zur Durchführung eines zeilenweisen Nachbarschaftstests über die Schaltungsausgänge (48i) mit dem dritten Register (50) verbunden ist und einen zweiten Satz von Schaltungsausgängen (52i) aufweist, die mit dem vierten Register (54) verbunden sind, und in das vierte Register (54) diejenigen Bildelemente aus dem zweiten Register (46) überträgt, die mit segmentierten Bildelementen aus dem ersten Register (42) weder direkt noch indirekt benachbart sind, und

(g) Mittel zum Übertragen des Inhaltes des dritten Speichers (50) auf die entsprechende Zeile des Pufferspeichers (85),

(h) Mittel zum Übertragen des Inhalts des vierten Speichers (54) auf die entsprechende Zeile des Bildspeichers (84),

(i) Mittel zum Fortschalten des Zeilenindex der in das erste Register (42) übertragenen Bildzeile und

(j) Mittel zum Fortschalten des Zeilenindex der in das zweite Register (46) übertragenen Bildzeile vorgesehen sind, derart, daß abwechselnd eine der Bildzeile des ersten Registers (42) voreilende oder nacheilende Bildzeile in das zweite Register (46) übertragen wird.

3. Schaltungsanordnung nach Anspruch 1, dadurch gekennzeichnet, daß

(a) die Logikschaltung zu jedem ersten Schaltungseingang (40i) und jedem zweiten Schaltungseingang (44i) ein ODER-Glied (56i) und ein UND-Glied (58i) mit drei/Eingängen enthält, als die besagte Verknüpfungseinheit

(b) an drei Eingängen des ODER-Gliedes (56i) der besagte erste Schaltungseingang (xi) sowie die Ausgänge der den benachbarten Schaltungseingängen (40i-1, 44i+1 bzw. 40i+1, 44i+1) zugeordneten UND-Glieder (58i-1, 58i+1)/anliegen, als die besagte Objektzugehörigkeit signalisierenden Ausgänge

(c) anden drei Eingängen des UND-Gliedes (58i) der Ausgang des zugeordneten ODER-Gliedes (56i), der besagte zweite Schaltungseingang (44i) und ein Rücksetzeingang anliegen und

(d) der zugehörige Schaltungsausgang (48i) der Logikschaltung von dem Ausgang des UND-Gliedes gebildet ist.

4. Schaltungsanordnung nach Anspruch 3, dadurch gekennzeichnet, daß die ODER-Glieder (..56i..) je zwei weitere Eingänge aufweisen, von denen jeder mit einem der beiden dem zugeordneten ersten Schaltungseingang (40i) benachbarten ersten Schaltungseingängen (40i-1 bzw. 40i+1) verbunden ist.

5. Schaltungsanordnung nach Anspruch 1, dadurch gekennzeichnet, daß als die besagten Verknüpfungseinheiten

(a) zu jedem ersten Schaltungseingang (154i) und jedem zweiten Schaltungseingang (164i)

($a_1$) ein erstes ODER-Glied (156i),
($a_2$) ein zweites ODER-Glied (158i),
($a_3$) ein erstes UND-Glied (160i) mit zwei Eingängen,
($a_4$) ein zweites UND-Glied (162i) mit zwei Eingängen und
($a_5$) ein drittes ODER-Glied (166i.) vorgesehen sind,

(b) der zugehörige erste Schaltungseingang (154i) mit je einem Eingang des ersten und des zweiten ODER-Gliedes (156i bzw. 158i) verbunden ist,

(c) ein zweiter Eingang des ersten ODER-Gliedes (156i) mit dem Ausgang ($Z_1$) des den auf einer Seite benachbarten Schaltungseingängen (154i-1, 164i-1) zugeordneten ersten UND-Gliedes (160i-1) verbunden ist,

(d) ein zweiter Eingang des zweiten ODER-Gliedes (158i) mit dem Ausgang ($Z_2$) des den auf der anderen Seite benachbarten Schaltungseingängen (154i+1, 164i+1) zugeordneten zweiten UND-Gliedes (162i+1) verbunden ist, wobei die besagten Ausgänge der besagten ersten UND-Glieder (160i-1 bzw. 162i+1) die besagten Objektzugehörigkeit signalisierenden Ausgänge bilden,

(e) an einem Eingang des ersten UND-Gliedes (160i) der Ausgang des ersten ODER-Gliedes (156i) und an einem Eingang des zweiten UND-Gliedes (162i) der Ausgang des zweiten ODER-Gliedes (158i) anliegt,

(f) an den beiden anderen Eingängen des ersten und des zweiten UND-Gliedes (160i bzw. 162i) der zugehörige zweite Schaltungseingang (164i) anliegt,

(g) die Ausgänge des ersten und des zweiten UND-Gliedes (160i bzw. 162i) an zwei Eingänge des dritten ODER-Gliedes (166i) anliegen und

(h) die Ausgänge der dritten ODER-Glieder (166i) die besagten Schaltungsausgänge der Logikschaltung bilden.

6. Schaltungsanordnungen nach einem der Ansprüche 3 bis 5, dadurch gekennzeichnet, daß weiterhin

(e) jedem Paar von ersten und zweiten Schaltungseingängen (40i, 44i) ein Exklusiv-ODER-Glied (60i) mit zwei Eingängen zugeordnet ist,

(f) an einem Eingang des Exklusiv-ODER-Gliedes (60i) der besagte Schaltungsausgang der Logikschaltung anliegt,

(g) an dem anderen Eingang des Exklusiv-ODER-Gliedes (60i) der zwei Schaltungseingang (44i) anliegt und

(h) die Ausgänge (52i-1, 52i, 52i+1) der Exklusiv-ODER-Glieder (..60i..) einen zweiten Satz von Schaltungsausgängen der Logikschaltung bilden.

7. Schaltungsanordnung nach einem der Ansprüche 1 bis 6, dadurch gekennzeichnet, daß die Mittel zur Bestimmung eines Segmentationskeimes

(a) ein Eingangsregister (20) enthalten, in welches in Form jeweils einer Binärzahl zeilenweise Bildinformationen (ui) des zu segmentierenden Binärbildes einlesbar sind,

(b) ein Ausgangsregister (30),

(c) eine festverdrahtete Logikschaltung (22)

(c1) mit einem Satz von Schaltungseingängen (18i), die mit je einer Speicherstelle des Eingangsregisters verbunden sind und

(c2) mit einem Satz von Schaltungsausgängen (28i), die je einer Speicherstelle des Ausgangsregisters (30) verbunden sind,

(c3) wobei die Logikschaltung an den Schaltungsausgängen jeweils nur die höchstwertige, von null verschiedene Stelle ausgibt, und

(d) Mittel zum Eingeben der Bildinformationen des Binärbildes zeilenweise nacheinander in das Eingangsregister ausgehend von einem Bildrand und

(e) Mittel zum Erfassen der als erste auftretenden, von Null verschiedenen und über einen Schaltungsausgang (28i) in dem Ausgangsregister (30) gespeicherten Bildinformation als besagter Segmentationskeim.

8. Schaltungsanordnung nach Anspruch 7, dadurch gekennzeichnet, daß

(a) die Logikschaltung (22) für jeden Schaltungseingang (18i)

(a1) ein ODER-Glied (32i) mit einem ersten und einem zweiten Eingang und

(a2) ein Exklusiv-ODER-Glied (34i) mit einem ersten und einem zweiten Eingang aufweist,

(b) der erste Eingang jedes ODER-Gliedes (32i) mit dem zugehörigen Schaltungseingang (18i) verbunden ist,

(c) der zweite Eingang jedes ODER-Gliedes (32i) mit dem Ausgang des ODER-Gliedes (32i + 1) verbunden ist, das dem dazu in Richtung höherer Wertigkeit der Binärstellung benachbarten Schaltungseingang (18i + 1) zugeordnet ist,

(d) der erste Eingang des Exklusiv-ODER-Gliedes (34i) mit dem Ausgang des zugeordneten ODER-Gliedes (32i) verbunden ist,

(e) der zweite Eingang des Exklusiv-ODER-Gliedes (34i) mit dem Ausgang des ODER-Gliedes (32i + 1) verbunden ist, das dem dazu in Richtung höherer Wertigkeit der Binärstellen benachbarten Schaltungseingang (18i + 1) zugeordnet ist, und

(f) die Ausgänge der Exklusiv-ODER-Glieder (..34i..) die besagten Schaltungsausgänge (28i) der Logikschaltung (22) bilden.

## Claims

1. Circuit arrangement for segmentation of a binary picture composed of lines and columns, comprising

(a) a picture memory (84) for storing the binary picture,

(b) means (22) for determining a segmentation germ (86) and

(c) means (38) for examining, whether a picture element is connected directly to the segmentation germ or through an uninterrupted chain of adjacent picture elements,

**characterized by**

(d) a first register (42) for one complete line of the binary picture,

(e) a second register (46) for one complete line of the binary picture,

(f) means for loading a first register (42) during a scanning cycle with picture elements of an observed line which are identified as associated with the object (82) to which the segmentation germ (86) belongs,

(g) means for loading the second register (46) during said scanning cycle with picture elements of a line (98) of the binary picture adjacent to the respective observed line (e.g. 87),

(h) a hardwired logic (Fig. 4) having

($h_1$) a set of first circuit inputs (40i-1, 40i, 40i + 1) each of which is connected to a memory location of the first register (42),

($h_2$) a set of second circuit inputs (44i-1, 44i, 44i + 1) each of which is connected to a memory location of the second register (46),

($h_3$) a set of circuit outputs (48i-1, 48i, 48i + 1) and

($h_4$) a sequence of logic elements (56i-1, 58i-1; 56i-1, 58i, 56i + 1, 58i + 1 and 156i-1, 158i-1, 160i-1, 162i-1, 166i-1, respectively; 156i, 158i, 160i, 162i, 166i, 156i + 1, 158i + 1, 160i + 1, 162i + 1, 166i + 1) to each of which one of the first and of the second circuit inputs and one of the circuit outputs are associated and each of which has further inputs which are connected to outputs of the adjacent logic elements signalizing object association,

- each circuit output not supplying any signal corresponding to a picture element associated with the object always then when no signal corresponding to the object is applied to the associated second circuit input,

- the circuit output of each logic element supplying a signal corresponding to a picture element associated with the object when

- a signal corresponding to the object is applied to the associated second circuit input and
- such a signal is applied to the first circuit input or to at least one of the further inputs.

2. Circuit arragement as set forth in claim 1, **characterized in that**

(a) a buffer memory (85) is arranged to store a binary picture of a segmented object from the binary picture of the picture memory (84),

(b) said means for loading the first register (42) is adapted to transfer a picture line from the buffer memory (85) to the first register (42),

(c) a picture line adjacent to said picture line is transferred from the buffer memory into the second register (46),

(d) a third register (50) and

(e) a forth register (54) are provided,

(f) the logic (38) for carrying out a line scanning neighbourhood test is connected to the third register (50) through the circuit outputs (48i) and has a second set of circuit outputs (52i) which are connected to the forth register (54), and transfers those picture elements from the second register (46) into the forth register (54), which picture elements are neither directly nor indirectly adjacent to segmented picture elements from the first register (42), and

(g) means for transferring the contents of the third memory (50) to the corresponding line of the buffer memory (85),

(h) means for transferring the contents of the forth memory (54) to the corresponding line of the picture memory (84),

(i) means for stepping the line index of the picture line transferred into the first register (42) and

(j) means for stepping the line index of the picture line transferred into the second register (46) are provided such that a picture line leading or lagging with respect to the picture element of the first register (42) is alternatingly transferred into the second register (46).

3. Circuit arragement as set forth in claim 1, **characterized in that**

(a) the logic, associated with each first circuit input (40i) and to each second circuit input (44i), comprises one OR-gate and one AND-gate having three inputs as said logic element,

(b) said first circuit input (xi) and the outputs of the AND-gates (58i-1, 58i + 1) associated with the adjacent circuit inputs (40i-1, 44i + 1 and 40i + 1, 44i + 1, respectively) are applied to three inputs of the OR-gate (56i) as said outputs signalizing the object association,

(c) the output of the associated OR-gate (56i), said second circuit input (44i) and a reset input are applied to the three inputs of the AND-gate (58i), and

(d) the associated circuit output (48i) of the logic is formed by the output of the AND-gate.

4. Circuit arragement as set forth in claim 3, **characterized in that** the OR-gates (..56i..) have two further inputs, each of which is connected to one of the two circuit inputs (40i-1 and 40i + 1, respectively) adjacent to the associated first circuit input (40i).

5. Circuit arragement as set forth in claim 1, **characterized in that**, as said logic elements,

(a) associated with each first circuit input (154i) and each second circuit input (164i)

($a_1$) a first OR-gate (156i),

($a_2$) a second OR-gate (158i),

($a_3$) a first AND-gate (160i) having two inputs,

($a_4$) a second AND-gate (162i) having two inputs and

($a_5$) a third OR-gate (166i) are provided,

(b) the associated first circuit input (154i) is connected to one input each of the first and of the second OR-gates (156i and 158i, respectively),

(c) a second input of the first OR-gate (156i) is connected to the output ($Z_1$) of the first AND-gate (160i-1) associated with the circuit inputs (154i-1, 164i-1) adjacent on one side,

(d) a second input of the second OR-gate (158i) is connected to the output ($Z_2$) of the second AND-gate (162i-1) associated with the circuit inputs (154i + 1, 164i + 1) adjacent on the other side, said outputs of said first AND-gates (160i-1 and 162i + 1, respectively) forming said outputs signalizing the object association,

(e) the output of the first OR-gate (156i) is applied to one input of the first AND-gate (160i) and the output of the second OR-gate (158i) is applied to one input of the second AND-gate (162i),

(f) the associated second circuit input (164i) is applied to the two other inputs of the first and the second AND-gates (160i and 162i, respectively),

(g) the outputs of the first and the second AND-gates (160i and 162i, respectively) are applied to two inputs of the third OR-gate (166i), and

(h) the outputs of the third OR-gate (166i) form said circuit outputs of the logic.

6. Circuit arrangements as set forth in any one of the claims 3 to 5, **characterized in that**, furthermore,

(e) an exclusive OR-gate (60i) having two inputs is associated with each pair of first and second circuit inputs (40i, 44i),

(f) said circuit output of the logic is applied to one input of the exclusive OR-gate (60i),

(g) the second circuit output (44i) is applied to the other input of the exclusive OR-gate (60i), and

(h) the outputs (52i-1, 52i, 52i + 1) of the exclusive OR-gates (..60i..) form a second set of circuit outputs of the logic.

7. Circuit arrangement as set forth in any one of the claims 1 to 6, **characterized in that** the means for determining a segmentation germ comprise

(a) an input register (20) into which, in the form of one binary number, line scanning picture information (ui) of the binary picture to be segmented is read in,

(b) an output register (30),

(c) a hardwired logic (22) having

(c₁) a set of circuit inputs (18i) which are connected to a memory location each of the input register, and

(c₂) a set of circuit outputs (28i) which are connected to a memory location each of the output register (30),

(c₃) the logic outputting only the most significant digits differing from zero, and

(d) means for inputting the picture informations of the binary picture consecutively line-by-line and starting from an edge of the picture, and

(e) means for detecting, as said segmentation germ, the first occuring picture information differing from zero and stored through a circuit output (28i) in the output register (30).

8. Circuit arrangement as set forth in claim 7, **characterized in that**

(a) the logic (22) for each circuit input (18i) has

(a₁) an OR-gate (32i) having a first and a second input, and

(a₂) an exclusive OR-gate (34i) having a first and a second input,

(b) the first input of each OR-gate (32i) is connected to the associated circuit input (18i,)

(c) the second input of each OR-gate (32i) is connected to the output of the OR-gate (32i + 1) which is associated with the circuit input (18i + 1) adjacent thereto in the direction of higher significance of the binary digits,

(d) the first input of the exclusive OR-gate (34i) is connected to the output of the associated OR-gate (32i),

(e) the second input of the exclusive OR-gate (34i) is connected to the output of the OR-gate (32i + 1) which is associated with the circuit input (18i + 1) adjacent thereto in the direction of higher significance of the binary digits, and

(f) the outputs of the exclusive OR-gates (..34i..) form said circuit outputs (28i) of the logic (22).

## Revendications

1. Disposition de circuit déstinée à la segmentation d'une image binaire composée de lignes et de colonnes, comprenant

(a) une mémoire d'image (84) déstinée à la mémorisation de l'image binaire,

(b) des moyens (22) déstinés à la détermination d'un germe de segmentation (86), et

(c) des moyens (38) déstinés à examiner si un élément d'image est relié directement ou par une chaîne non interrompue d'éléments d'image adjacents au germe de segmentation,

caractérisée par le fait que

(d) un premier registre (42) pour respectivement une ligne complète,

(e) un second registre (46) pour respectivement une ligne complète,

(f) des moyens déstinés à charger le premier registre (42) lors d'un cycle d'exploration avec des éléments d'image d'une ligne observée, qui sont reconnus comme associés à l'objet (82) auquel appartient le germe de segmentation (86),

(g) des moyens déstinés à charger le second registre (46) lors dudit cycle d'exploration avec des éléments d'image d'une ligne respectivement adjacente à la ligne observée (p.ex. 87) de l'image binaire,

(h) un circuit logique fixement câblé (fig.4) ayant

(h₁) un jeu de premières entrées de circuit (40i-1, 40i, 40i-1) reliées chacune à un emplacement de mémoire du premier registre (42),

(h₂) un jeu de secondes entrées de circuit (44i-1, 44i, 44i-1) reliées chacune à un emplacement de mémoire du second registre (46),

(h₃) un jeu de sorties de circuit (48i-1, 48i, 48i + 1) et,

(h₄) une séquence d'éléments logiques (56i-1, 58i-1, 56i-1, 58i, 56i + 1, 58i + 1 et 156i-1, 158i-1, 160i-1, 162i-1, 166i-1, 156i, 158i, 160i, 162i, 166i, 156i + 1, 158i + 1, 160i + 1, 162i + 1, 166i + 1) auxquels sont associées respectivement l'une des premières et secondes entrées de circuit et l'une des sorties de circuit, et dont chacune présente d'autres entrées reliées à des sorties des éléments logiques respectivement adjacents, qui signalent l'appartenance à un objet, dans lequel

- chaque sortie de circuit ne fournit pas de signal correspondant à un élément d'image appartenant à un objet, toujours lorsqu'aucun signal correspondant à un objet n'est appliqué à la seconde entrée de circuit associée,

- la sortie de circuit de chaque élément logique fournit un signal correspondant à un élément d'image appartenant à un objet, lorsque

- un signal correspondant à l'objet est associé à la seconde entrée de circuit associée, et

- un tel signal est appliqué à la première entrée de circuit ou au moins à l'une des autres entrées.

2. Disposition de circuit selon la revendication 1, caractérisée par le fait que

(a) une mémoire tampon (85) est prévue, dans laquelle une image binaire d'un objet segmenté peut être mémorisée d'une image binaire de la mémoire d'image (84),

(b) par lesdits moyens déstinés à charger le premier registre (42), une ligne d'image de la mémoire tampon (85) est transmissible au premier registre (42),

(c) une ligne d'image adjacente à ladite ligne d'image est transmissible de la mémoire d'image dans le second registre (46),

(d) un troisième registre (50), et

(e) un quatrième registre (54) sont prévus,

(f) le circuit logique (38) est relié au troisième registre (50) par les sorties de circuit (48i) afin d'effectuer un examen de voisinage par lignes, et présente un second jeu de sorties de circuit (52i) reliées au quatrième registre (54), et transmet dans le quatrième registre (54) ces éléments d'image du second registre (46) qui ne sont reliés ni directement ni indirectement aux élémlents d'image segmentés du premier registre (42), et

(g) des moyens déstinés à transmettre le contenu de la troisième mémoire (50) à la ligne correspondante de la mémoire tampon (85),

(h) des moyens déstinés à transmettre le contenu de la quatrième mémoire (54) à la ligne correspondante de la mémoire d'image (84),

(i) des moyens déstinés à avancer l'indice de ligne de la ligne d'image transmise dans le premier registre (42), et

(j) des moyens déstinés à avancer l'indice de ligne de la ligne d'image transmise dans le second registre (46), de sorte qu'une ligne d'image en avant ou en arrière de la ligne d'image du premier registre (42) est transmise alternativement dans le second registre (46).

3. Disposition de circuit selon la revendication 1, caractérisée par le fait que

(a) le circuit logique comprend pour chaque première entrée de circuit (40i) et chaque seconde entrée de circuit (44i) un opérateur OU (56I) et un opérateur ET (58i) avec trois entrées comme ledit élément logique,

(b) ladite première entrée de circuit (xi) ainsi que les sorties des opérateurs ET (58i-1, 58i + 1) associés aux entrées de circuit adjacentes (40i-1, 44i + 1, et 40i + 1, 44i + 1) sont appliquées comme sorties signalisant ladite appartenance à l'objet aux trois entrées de l'opérateur OU (56i),

(c) la sortie de l'opérateur OU (56i), ladite seconde entrée de circuit (44i) et une entrée de remise sont appliquées aux trois entrées de l'opérateur ET (58i), et

(d) la sortie de circuit associée (48i) du circuit logique est formée par la sortie de l'opérateur ET.

4. Disposition de circuit selon la revendication 3, caractérisée par le fait que les opérateurs OU (...56i..) ont respectivement deux autres entrées dont chacune est reliée à l'une des deux entrées de circuit (40i-1 et 40i + 1, respectivement) adjacentes à la première entrée de circuit associée (40i).

5. Disposition de circuit selon la revendication 1, caractérisée par le fait que comme lesdits éléments logiques sont prévus

(a) pour chaque première entrée de circuit (154i) et chaque seconde entrée de circuit (164i)

(a₁) un premier opérateur OU (156i),

(a₂) un second opérateur OU (158i),

(a₃) un premier opérateur OU (160i) avec deux entrées,

(a₄) un second opérateur ET (162i) avec deux entrées, et

(a₅) un troisième opérateur OU (166i),

(b) la première entrée de circuit associée (154i) est reliée à une entrée du premier ou du second opérateur OU (156i et 158i, respectivement),

(c) une seconde entrée du premier opérateur OU (156i) est reliée à la sortie ($Z_1$) du premier opérateur ET (160i-1) qui est associé aux entrées de circuit adjacentes sur un côté (154i-1, 164i-1),

(d) une seconde entrée du second opérateur OU (158i) est reliée à la sortie ($Z_2$) du second opérateur ET (162i + 1) qui est associé aux entrées de circuit adjacentes sur l'autre côté (154i + 1, 164i-1), lesdites sorties desdits premiers opérateurs ET (160i-1 et 162i + 1) formant lesdites sorties signalisant ladite appartenance à l'objet,

(e) la sortie du premier opérateur OU (156i) est appliquée à une entrée du premier opérateur ET (160i) et la sortie du second opérateur OU (158i) est appliquée à une entrée du second opérateur ET (162i),

(f) la seconde entrée de circuit associée (164i) est appliquée aux deux autres entrées du premier et du second opérateur ET (160i et 162i, respectivement),

(g) les sorties du premier et du second opérateur ET (160i et 162i, respectivement) sont appliquées à deux entrées du troisième opérateur OU (166i), et

(h) les sorties du troisième opérateur OU (166i) forment lesdites sorties de circuit du circuit logique.

6. Disposition de circuit selon l'une des revendications 3 à 5, caractérisée par le fait que, en outre,

(e) un opérateur OU exclusif (60i) avec deux entrées est associé à chaque paire de première et de secondes entrées de circuit (40i, 44i),

(f) ladite sortie de circuit du circuit logique est appliquée à une entrée de l'opérateur OU exclusif (60i),

(g) la seconde entrée de circuit (44i) est appliquée à l'autre entrée de l'opérateur OU exclusif (60i), et

(h) les sorties (52i-1, 52i, 52i + 1) des opérateurs OU exclusif (...60i..) forment un second jeu de sorties de circuit du circuit logique.

7. Disposition de circuit selon l'une des revendications 1 à 6, caractérisée par le fait que les moyens déstinés à déterminer un germe de segmentation comprennent

(a) un registre d'entrée (20) dans lequel sous forme respectivement d'un nombre binaire, des informations d'image (ui) de l'image binaire à segmenter peuvent être introduites par ligne,

(b) un registre de sortie (30),

(c) un circuit logique (22) fixement câblé

(c₁) avec un jeu d'entrées de circuit (18i) reliées à un emplacement de mémoire du registre d'entrée à la fois, et

(c₂) avec un jeu de sorties de circuit (18i) reliées à un emplacmeent de mémoire du registre de sortie (30) à la fois,

(c₃) le circuit logique ne sortant en output aux sorties de circuit que l'emplacement le plus élevé différent de zéro, et

(d) des moyens déstinés à introduire l'information d'image de l'image binaire par ligne succéssivement dans le registre d'entrée partant d'un bord d'image, et

(e) des moyens déstinés à détecter l'information d'image apparaîssant en première et différente de zéro et mémorisée par une sortie de circuit (28i) dans le registre de sortie (30), comme ledit germe de segmentation.

8. Disposition de circuit selon la revendication 7, caractérisée par le fait que

(a) le circuit logique (22) a pour chaque entrée de circuit (18i)

(a₁) un opérateur OU (32i) avec une première et une seconde entrée, et

(a₂) un opérateur OU exclusif (34i) avec une première et une seconde entrée,

(b) la première entrée de chaque opérateur OU (32i) est reliée à l'entrée de circuit associée (18i),

(c) la seconde entrée de chaque opérateur OU (32i) est reliée à la sortie de l'opérateur OU (32i + 1) qui est associé à l'entrée de circuit (18i + 1) adjacente à celle-ci en direction d'une valeur plus élevée de la position binaire,

(d) la seconde entrée de l'opérateur exclusif OU (34i) est reliée à la sortie de l'opérateur OU associé (32i),

(e) la seconde entrée de l'opérateur OU exclusif (34i) est reliée à la sortie de l'opérateur OU (32i + 1) qui est associé à l'entrée de circuit (18i + 1) adjacente à celle-ci en direction d'une valeur plus élevée des positions binaires, et

(f) les sorties de l'opérateur OU exclusif (...34i..) forment lesdites sorties de circuit (28i) du circuit logique (22).

Fig.1

Fig. 3

Fig. 2

Fig.4

EP 0 195 283 B1

Fig. 5

Fig. 6

Fig.6B

Fig.6A

Fig.7

Fig. 8

Fig.9